# EUROPÄISCHE PATENTSCHRIFT

(11) **EP 1 818 357 B1**
(45) Veröffentlichungstag und Bekanntmachung des Hinweises auf die Patenterteilung: **06.08.2008**
(21) Anmeldenummer: 07002399.9
(22) Anmeldetag: 05.02.2007
(51) Int. Cl.: C08J 5/00

(54) **Modifiziertes polymeres Substrat, insbesondere kunststoff, Verfahren zu dessen Herstellung und dessen Verwendung**
Modified polymer substrate, in particular plastic, method for its manufacture and application thereof
Substrat polymère modifié, en particulier plastique, son procédé de fabrication et son utilisation

(30) Priorität: 09.02.2006 DE 102006006519
(43) Veröffentlichungstag der Anmeldung: 15.08.2007
(73) Patentinhaber: Innovent e.V. Technologieentwicklung, 07745 Jena (DE)
(72) Erfinder: Heft, Andreas, 07545 Gera (DE); Schimanski, Arnd, 44329 Dortmund (DE); Pfuch, Andreas, 99510 Apolda (DE); Grünler, Bernd, 07937 Zeulenroda (DE)
(74) Vertreter: Donath, Dirk

(56) Entgegenhaltungen:
- WO-A-20/04001107
- US-A1- 2003 164 427
- US-A1- 2005 029 498
- DATABASE WPI Week 200503 Derwent Publications Ltd., London, GB; AN 2005-024078 XP002432702 & JP 2004 346143 A (MITSUI CHEM INC) 9. Dezember 2004 (2004-12-09)
- DATABASE WPI Week 200547 Derwent Publications Ltd., London, GB; AN 2005-461936 XP002432703 & JP 2005 161599 A (TEIJIN LTD) 23. Juni 2005 (2005-06-23)

## Beschreibung

Die Erfindung betrifft ein modifiziertes polymeres Substrat, insbesondere Kunststoff, ein Verfahren zu dessen Herstellung und dessen Verwendung.
Kohlenstoff-Nanotubes [(Carbon Nano Tubes, CNT; verschiedene Typen von CNTs werden derzeit unterschieden- single wall (Einzelwand - Röhren) und multi wall (Mehrwand - Röhren)], welche in ein Polymer eingebettet sind, sind grundsätzlich bekannt (siehe hierzu bspw. US 63 31 265 B1 und JP 2002-2 73 741 A).

Die DE 103 01 996 A1 offenbart ein Verfahren zur Herstellung von Kohlenstoffnanotubeverstärkten Polymeren, mit den Verfahrensschritten Synthesieren des Polymers mittels Polykondensationsreaktion, und Zumischen von Kohlenstoffnanotubes. Bekannte Verfahren weisen den Nachteil auf, dass eine homogene Verteilung der Kohlenstoffnanotubes in dem Polymer nicht zu erreichen ist, da die gleichmäßige Dispergierung der Kohlenstoffnanotubes im aufgeschmolzenen Polymer unzureichend ist.
Das Verfahren gemäß DE 103 01 996 A1 löst dieses Problem, indem das Zumischen der Kohlenstoffnanotubes vor dem Ende der Polykondensationsreaktion erfolgt.
Ziel dieses Verfahrens ist die Bereitstellung eines auf mechanische Belastung stabiler reagierenden Substrats, das eine hohe Festigkeit bei gleichzeitig geringem Gewicht aufweist.

Die Schrift DE 103 01 996 A1 offenbart weiterhin eine Vorrichtung zur Ausführung des erfindungsgemäßen Verfahrens und ein mit dem erfindungsgemäßen Verfahren hergestelltes Kohlenstoffnanotubeverstärktes Polyester.

Aus DE 10 2004 027 865 A1 ist ein Verfahren bekannt, vermittels dessen leitende Kohlenstoffnanotubes (CNTs), erhalten durch das Dotieren carboxylierter CNTs mit Metallnanokristallen über funktionale chemische Gruppen, bereit gestellt wird.
Auch wird ein Verfahren zur Herstellung eines Musters oder Films der leitenden CNTs, das das wiederholte Abscheiden der leitenden CNTs auf einem Trägermaterial, um eine hohe Oberflächendichte zu haben, offenbart.
Weiterhin offenbart die DE 10 2004 027 865 A1 einen Biosensor, worin Biorezeptoren, die Zielbiomoleküle binden, selektiv an den leitenden CNTs oder dem CNT-Muster oder -Film befestigen können, und auch ein Verfahren zu dessen Herstellung.
Durch den leitenden Biosensor gemäß DE 10 2004 027 865 A1 können verschiedene Zielbiomaterialien, die an die Biorezeptoren binden oder mit diesen reagieren, präzise direkt oder durch elektrochemische Signale in großen Mengen in einem Schritt gemessen werden.
Weiterhin entspricht dieser Biosensor der Anforderung, dass Biomaterialien gemäß ihren charakteristischen Eigenschaften in einem flüssigen Zustand gemessen werden müssen. Zusätzlich ist es dem diesem Biosensor möglich, eine elektrische Detektionsmethode, fähig zur Bereitstellung präziser Messergebnisse, sogar mit einer kleinen Menge an Quelle anzuwenden.

Kohlenstoff-Nanotubes (Carbon Nano Tubes, CNT) zeigen aufgrund ihrer spezifischen strukturellen Beschaffenheit einige sehr außergewöhnliche Eigenschaften. So sind sie zum Beispiel durch eine ausgezeichnete Wärmeleitfähigkeit und elektrische Leitfähigkeit gekennzeichnet (siehe dazu bspw. DE 101 59895). Daher sind sie, ähnlich wie Russpartikel, die zum Beispiel als Zusätze in Kunststoffstripes zum Mikrowellenschweissen thermoplastischer Kunststoffe Verwendung finden, in der Lage, elektromagnetische Strahlung im GHz-Bereich zu absorbieren.
Die Absorption von GHz-Strahlung durch mit CNT aufgefüllte Polymermaterialen wird neuerdings dazu ausgenutzt, die Strahlungswerte von Mobiltelefonen zu reduzieren. Bei der Extrusion der Gehäuseschalen werden dem Kunststoffgranulat CNT-Beimengungen zugefügt, wobei Konzentrationen von wenigen Prozent ausreichend sind, um hervorragende Absorptionseigenschaften zu erzielen.
Im Gegensatz zu den Russpartikeln, wie sie als Zusätze beim Mikrowellen-Schweißen in notwendigen Konzentrationen von bis zu 20% Verwendung finden, erlauben die CNT durch die niedrigen erforderlichen Konzentrationen prinzipiell auch die Herstellung transparenter Beschichtungen oder Folien, wobei auch die spezifische Struktur der CNT beiträgt. So wurden bereits dünne Nanofolien, die nur aus miteinander verbundenen CNT bestehen und transparent, elektrisch leitfähig und sogar lumineszierend sind, hergestellt (Technology Review Jan. 2006, S. 79).
Aufgabe der vorliegenden Erfindung ist es, ein modifiziertes Substrat, insbesondere eine transparente Beschichtung aus Kunststoff bzw. ein transparenter Kunststoff in Form einer Folie, zur Verfügung zu stellen, welches eine elektrische Leitfähigkeit aufweist, und ein Verfahren zur Herstellung dieser Substrate sowie deren Verwendung anzugeben.
Diese Aufgabe wird durch ein Substrat gemäß Anspruch 1, ein Verfahren gemäß Anspruch 7 und Verwendungen gemäß den Anspruch 14 gelöst. Vorteilhafte Ausgestaltungen werden in den nachgeordneten Ansprüchen angegeben.

Gemäß der Erfindung werden Kunststoffe, welche vorzugsweise transparent sind, mit einem Anteil an CNT modifiziert, um daraus Folien herzustellen. Dies geschieht beispielsweise durch das Extrudieren von Granulaten mit den entsprechenden Zusätzen an CNT, wobei der Gewichtsanteil der CNT typischerweise unter 10% liegt, vorzugsweise werden Anteile von weniger als 1% eingebracht. Dadurch werden die Transparenz und weitere Eigenschaften des Kunststoffes erhalten, gleichzeitig aber die elektrische Leitfähigkeit hergestellt.
Die Modifizierung des Kunststoffes kann auch dadurch erfolgen, dass einzelne zu seiner Herstellung verwendete in fester oder flüssiger Phase vorliegende Komponenten (insbesondere Monomere, Oligomere und andere Vorstufen des Polymers) und/oder Zusatzstoffe (Additive) mit den CNT versetzt werden und diese somit durch den Verarbeitungsprozess in den fertigen Kunststoff, z.B. eine Folie, gelangen. Insbesondere sind hierbei Weichmacher, Lichtschutzmittel, Flammschutzmittel oder Farbstoffe sowie Füllstoffe zu nennen.

Die Konzentrationen der CNT in den verwendeten Komponenten bzw. Additiven berechnen sich aus dem Anteil dieser Komponenten bzw. Additive an dem fertigen Kunststoff, so dass im fertigen Kunststoff ein CNT-Anteil von typischerweise weniger als 10%, vorzugsweise weniger als 1 %, enthalten ist.

Besonders vorteilhaft kann eine CNT-haltige Polyethylenfolie (PE-Folie) durch Extrudieren eines PE-Pulvers, mit 0,1 Masse - % an CNT versetzt, erhalten werden. Dabei erfolgt die Verteilung / das Homogenisieren durch mechanische Umwälzung mit stufenweiser Verringerung der CNT-Konzentration bis auf die 0,1% durch Hinzugabe von PE-Pulver mit Partikelgrößen von 200µm bis 500µm. In einem weiteren Verfahren wird ein sehr feines PE-Pulver mit Partikelgrößen von kleiner 200 µm, vorzugsweise kleiner 100 µm, verwendet. Auch hier erfolgt die Verteilung und Homogenisierung der CNT durch mechanische Umwälzungen und stufenweise Verringerung der Konzentration durch Zugabe weiteren PE-Pulvers, bis eine Endkonzentration der CNT von 0,1 % bis maximal 1% erreicht ist. Dieses mit CNT versetzte PE-Pulver wird durch einen Extrusionsprozess oder ein Spritz-Blas-Verfahren zu einer Folie verarbeitet.

Eine Folie aus modifiziertem Polyvinylbutyral (PVB), wie sie zur Herstellung von Verbundglasscheiben durch Laminieren zwischen zwei Glasscheiben verwendet wird, kann durch die Zugabe von CNT in einen für die Folienherstellung verwendeten Zuschlagstoff erzeugt werden. Besonders vorteilhaft erweist sich hier eine Dispersion der CNT in einen Weichmacher, welcher mit PVB-Pulver vermischt wird, um daraus Folien mit einem CNT-Gehalt von maximal 10%, bevorzugt 0,1% - 1 %, herzustellen. Entsprechend des Anteils des Weichmachers von z.B. 20%-25% an der fertigen PVB-Folie liegt die Konzentration der CNT in der Dispersion bei maximal 40%-50%, bevorzugt bei 0,4% bis 5%."
Die Verwendung der so hergestellten, mit CNT modifizierten Kunststofffolien zum Laminieren von Gläsern und Kunststoffplatten stellt eine erfindungsgemäße Anwendung dar. Dabei werden sowohl Verbundgläser, bei denen zwei oder mehrere Scheiben mit dazwischen liegenden Folien laminiert werden (Verbundsicherheitsglas, VSG) als auch oberflächlich laminierte Gläser oder Kunststoffplatten hergestellt.
Damit ist eine Funktionalisierung des Glases bzw. Glasverbundes oder von Kunststoffplatten möglich, welche mit den bisher eingesetzten CVD- und PVD-Beschichtungstechnologien nicht oder nur mit deutlich höherem Aufwand realisiert werden können.
Insbesondere wird Polyvinylbutyral- (PVB-) mit CNT modifiziert. Folien aus diesem gemäß der Erfindung modifizierten PVB werden insbesondere bei der Herstellung von Verbundgläsern verwendet. Dort, wo die Sicherheitsanforderungen an das Verbundglas die Verwendung der PVB-Folien nicht zwingend erforderlich machen, sind auch andere CNT-modifizierte Kunststoffe einsetzbar.
Eine spezielle Ausführungsform stellt die Verwendung von CNT-modifizierten Kunsthofffolien in Gläsern dar, welche elektromagnetische Strahlung im GHz-Bereich absorbieren. Derartige Scheiben finden z.B. Verwendung als Radarschutzverglasung auf Flughäfen und in der Umgebung von Sendeanlagen wie Mobilfunkantennen. Bei Verwendung einer mit CNT modifizierten PVB-Folie zur Herstellung typischer Fensterverglasung ergibt sich auf der Grundlage derzeitiger Preise für CNT ein Mehrpreis von 2-3 €/m² gegenüber herkömmlicher Verglasung ohne diese Funktionalisierung.
Im Vergleich zu den bisher eingesetzten Methoden und Verfahren zur Strahlungsminderung im GHz-Bereich, welche durch die vergleichsweise teure PVD-Beschichtung der Gläser erreicht wird, bietet die Erfindung neben geringen Kosten eine Reihe weiterer Vorteile:
Die Gläser mit einer mit CNT modifizierten PVB-Folie besitzen eine hohe Transparenz im sichtbaren Bereich, die bei den mit dünnen Metallfilmen beschichteten PVD-Gläsern nicht erreicht wird. Zudem absorbieren die CNT-haltigen Folien in den Gläsern die GHz-Strahlung und verhindern damit störende Reflexionen, welche für die Radarüberwachung auf Flughäfen zu einem Problem werden können und bei herkömmlichen Radarschutzverglasungen durch eine kostentreibende Fassaden- und Fentstergestaltung mit etwa um 5° verkippten Fronten vermieden werden.
Eine weitere erfindungsgemäße Anwendung für die Mikrowellenabsorption der CNT-haltigen Folien sind Sichtfenster an Mikrowellengeräten, die ohne die bisher zur Abschirmung verwendeten Metallgitter eingesetzt werden und einen deutlich besseren Durchblick gewähren.
Darüber hinaus besteht eine weitere Anwendung in der Beschichtung von Oberflächen mit einem statischen Aufladungen entgegenwirkenden transparenten Polymerfilm.
Ein großes Anwendungsfeld der gemäß der Erfindung mit CNT modifizierten Folien stellen beheizbare Scheiben dar. Hierzu werden die mit CNT modifizierten Folien zwischen Glas- oder Kunststoffplatten laminiert, so dass dieser Verbund durch einen elektrischen Strom, welcher die modifizierte Folie durchfließt, aufgeheizt wird. Gegenüber bestehenden Lösungen ergeben sich auch hier wesentliche Vorteile:
   Bisher werden für die großflächige Heizung von Scheiben dünne PVD-Schichten aus TCO- Materialien (Transparent Conductive Oxides) eingesetzt. Deren Abscheidung ist teuer und sie sind auf Grund ihrer geringen Dicke von wenigen Nanometern elektrisch äußerst schwierig zu kontaktieren. Die Herstellung der CNT-modifizierten Folien und das Laminieren sind dagegen ein sehr preiswertes Verfahren. Da die Folien typische Dicken von einigen hundert Mikrometern und mehr aufweisen, stellt auch die elektrische Kontaktierung kein Problem dar. Durch Variationen des CNT-Gehalts in den Folien wird die Leitfähigkeit gezielt eingestellt und damit die Heizleistung definiert. Durch Kombination von Folien unterschiedlicher Leitfähigkeiten ist die großflächig homogene Verteilung der Heizleistung realisierbar. Die Folien mit hoher Leitfähigkeit fungieren als großflächige Kontaktierung der dazwischen liegenden Folie mit höherem Widerstand, welche als Heizleiter wirkt.

Kern der Erfindung ist ein modifizierter polymerer Kunststoff, dadurch gekennzeichnet, dass in eine Polymermatrix eine Menge von wenigen Massenprozent (≤ 10%), bevorzugt von weniger als 1 % , an CNT derart eingebracht sind, dass daraus hergestellte Folien erfindungsgemäß im sichtbaren Bereich des elektromagnetischen Spektrums transparent sind und eine elektrische Leitfähigkeit aufweisen. Die Dicke dieser Folien liegt im Bereich von 1 µm bis hin zu einigen Millimetern, wobei dickere Folien auch durch Laminieren mehrerer dünnerer Folien erzeugt werden. Als Materialien für die Folien werden alle thermoplastisch verformbaren Polymerstoffe verwendet, bevorzugt solche mit guter Laminierfähigkeit und hoher Festigkeit, wie bspw. PVB.
Das erfindungsgemäße Substrat kann als Beschichtung (Folie vor Ort) bzw. als vorgefertigte Folie zur späteren Beschichtung eines Trägermaterials vorliegen.
Für die verbesserte Einbindung der CNT in die Polymermatrix und damit die Erzielung der geforderten Transparenz und elektrischen Leitfähigkeit werden die CNT auch erfindungsgemäß vorbehandelt.
Dies geschieht mit Verfahren der physikalischen und/oder chemischen Gasphasenabscheidung (PVD, CVD), Sol-Gel-Prozessen und anderen Verfahren der Flüssigphasenbeschichtung. Diese Vorbehandlung findet entweder unter Atmosphärendruckbedingungen statt oder unter Vakuumbedingungen. Dies schließt auch Verfahren wie die flammengestützte Pyrolyse (CCVD) und die flammengestützte Hydrolyse (r-CCVD) ein.
Die erfindungsgemäße Vorbehandlung der CNT erfolgt auch mit Stoffen, welche die Elemente Silizium, Titan, Aluminium, Kupfer, Zinn, Wolfram, Tantal, Cer, Molybdän, Zink, Zirkon, Silber, Niob, Indium, Arsen, Selen, Antimon, Fluor und Chlor enthalten sowie mit Sauerstoff, Stickstoff, Argon, Wasserstoff, Chlor oder Fluor bzw. mit Gemischen aus diesen Gasen.
Gemäß der vorliegenden Erfindung werden die mit CNT modifizierten Polymere auf ein Substrat, welches aus Glas in jedweder Form und Zusammensetzung oder aus einem transparenten Kunststoff jedweder Form und Zusammensetzung besteht, aufgebracht. Bevorzugt werden flache Substrate wie Floatglasscheiben oder Kunststoffplatten bzw. - folien oder Hohlkörper aus Glas oder Kunststoff. Das Aufbringen der modifizierten Polymere erfolgt durch bekannte Auftragstechniken, insbesondere durch Aufextrudieren, Aufblasen oder Auflaminieren.
Für den Aufbau von Verbunden werden einzelne oder mehrere modifizierte Polymerfolien zwischen zwei Substraten laminiert. Der Aufbau aus mehreren Abfolgen von Substraten und modifizierten Folien liegt ebenso im Bereich der Erfindung, wie die Abfolge mehrer Folien mit unterschiedlicher Modifikation der elektrischen Leitfähigkeit innerhalb eines solchen Verbundes.

Alle in der Beschreibung und den nachfolgenden Ansprüchen dargestellten Merkmale können sowohl einzeln als auch in beliebiger Kombination miteinander erfindungswesentlich sein.

## Patentansprüche

1. Modifizierter polymerer Kunststoff umfassend eine Matrix aus Polymer und CNT, **dadurch gekennzeichnet, dass** das Polymer PVB ist, in der Polymermatrix eine Menge CNT von ≤ 1 Massenprozent eingebracht ist, wobei der Kunststoff als Beschichtung oder Folie mit einer Dicke von 1 µm bis hin zu einigen Millimetern ausgebildet ist.

2. Modifizierter polymerer Kunststoff gemäß Anspruch 2, **dadurch gekennzeichnet, dass** mehrere dünne Folien einen Verbund ausbilden.

3. Modifizierter polymerer Kunststoff gemäß Anspruch 1 oder 2, **dadurch gekennzeichnet, dass** das Polymer thermoplastisch verformbar ist, eine gute Laminierfähigkeit sowie eine hohe Festigkeit besitzt.

4. Verfahren zur Herstellung des modifizierten Kunststoffs gemäß einem oder mehrerer der voran stehenden Ansprüche umfassend folgende Verfahrensschritte:
• Extrudieren von festen PVB-Materialien in Granulat- oder Pulverform unter Zusatz von CNT, wobei der Gewichtsanteil der CNT unter 1 Masseprozent und
• Beschichtung eines Trägers bzw. Formung des Kunststoffs zu einer Folie.

5. Verfahren und Herstellung des modifizierten Kunststoffs gemäß einem oder mehrerer der voran stehenden Ansprüche umfassend folgende Verfahrensschritte:
- Extrudieren von festen PVB-Materialien Materialien in Granulat- oder Pulverform mit flüssigen Komponenten und/oder Additiven, wobei die CNT mindestens einer der verwendeten Komponenten oder Additive beigemischt werden, so dass der Gewichtsanteil der CNT im Endprodukt unter 1 Masseprozent liegt,
- Beschichtung eines Trägers bzw. Formung des Kunststoffs zu einer Folie.

6. Verfahren' zur Herstellung des modifizierten Kunststoffs gemäß Anspruch 5, **dadurch gekennzeichnet, dass** vor der Zugabe der CNT eine Vorbehandlung dieser vermittels physikalischer und/oder chemischer Gasphasenabscheidung (PVD, CVD), Sol-Gel-Prozessen und anderen Verfahren der Flüssigphasenbeschichtung erfolgt.

7. Verfahren zur Herstellung des modifizierten Kunststoffs gemäß Anspruch 6, **dadurch gekennzeichnet, dass** das PVB mit einem Additiv, welchem CNT homogen beigemengt sind, derart versetzt wird, dass sich eine homogen verteilte Endkonzentration der CNT von 0,1 bis 1 Masseprozent ergibt.

8. Verfahren zur Herstellung des modifizierten Kunststoffs gemäß Anspruch 7, **dadurch gekennzeichnet, dass** die Vorbehandlung unter Atmosphärcndruckbedingungen oder unter Vakuumbedingungen stattfindet.

9. Verfahren zur Herstellung des modifizierten Kunststoffs gemäß Anspruch 7, **dadurch gekennzeichnet, dass** die Vorbehandlung durch flammengestützte Pyrolyse (CCVD) oder flammengestützte Hydrolyse (r-CCVD) erfolgt.

10. Verfahren zur Herstellung des modifizierten Kunststoffs gemäß Anspruch 7, **dadurch gekennzeichnet, dass** die Vorbehandlung in Gegenwart von Silizium, Titan, Aluminium, Zinn, Wolfram, Tantal, Cer, Molybdän, Zink, Zirkon, Silber, Niob, Indium, Arsen, Selen, Antimon, Fluor und Chlor erfolgt.

11. Verfahren zur Herstellung des modifizierten Kunststoffs gemäß Anspruch 7, **dadurch gekennzeichnet, dass** die Vorbehandlung in Gegenwart von Kupfer erfolgt.

12. Verfahren zur Herstellung des modifizierten Kunststoffs gemäß Anspruch 7 oder 11, **dadurch gekennzeichnet, dass** die Vorbehandlung in Gegenwart von Sauerstoff, Stickstoff, Argon, Wasserstoff, Chlor oder Fluor bzw. mit Gemischen aus diesen Gasen erfolgt.

13. Verwendung eines modifizierten polymezeren Kunststoffs gemäß, einem oder mehrerer der voran stehenden Ansprüche 1 bis 3 als Beschichtung eines Substrats, welches aus transparenten Glas oder aus transparenten Kunststoff besteht.

14. Verwendung eines modifizierten Kunststoffs gemäß Anspruch 13 für Herstellung von Verbundsicherheitsglas (VSG).

## Claims

1. Modified polymer plastic comprising a matrix of polymer and CNT, wherein the polymer is PVB, CNT is added in an amount of ≤ 1 mass per cent , and the plastic is provided as a layer or foil having a thickness of between 1 µm up to some millimetres.

2. Modified polymer plastic as set forth in claim 1, wherein several thin foil form a composite.

3. Modified polymer plastic as set forth in claim 1 or 2, wherein the polymer can be thermo-ductile, has a good laminability and exhibits a high strength.

4. Method for manufacturing the modified plastic as set forth in one or several of the previous claims including the following procedure steps:
- extrusion of solid PVB materials provided as granules or powder by adding CNT in a weight proportion less than 1 mass per cent, and
- coating of a carrier or forming the plastic to a foil.

5. Method and manufacture of the modified plastic as set forth in one or several of the previous claims including the following procedure steps:
- extrusion of solid PVB materials, materials provided as granules or powder with liquid components and/or additives, and the CNT is added to at least one of the components or additives used so that the weight proportion of the CNT is less than 1 mass per cent in the final product,
- coating of a carrier or forming the plastic to a foil.

6. Method for manufacturing the modified plastic as set forth in claim 5, wherein the CNT is pretreated by physical and/or chemical vapour deposition (PVD, CVP), sol-gel processes and other methods of liquid phase coating before it is added.

7. Method for manufacturing the modified plastic as set forth in claim 6, wherein an additive, homogeneously mixed with CNT, is added to the PVB in such a manner that a homogeneously distributed final concentration of the CNT from 0.1 to 1 mass per cent is obtained.

8. Method for manufacturing the modified plastic as set forth in claim 7, wherein the pretreatment is performed under atmospheric pressure or vacuum conditions.

9. Method for manufacturing the modified plastic as set forth in claim 7, wherein the pretreatment is performed by flame-supported pyrolysis (CCVD) or flame-supported hydrolysis (r-CCVD).

10. Method for manufacturing the modified plastic as set forth in claim 7, wherein the pretreatment is performed in the presence of silicon, titan, aluminium, tin, tungsten, tantalum, cerium, molybdenum, zinc, zircon, silver, niobium, indium, arsenic, selenium, antimony, fluorine and chlorine.

11. Method for manufacturing the modified plastic as set forth in claim 7, wherein the pretreatment is performed in the presence of copper.

12. Method for manufacturing the modified plastic as set forth in claim 7 or 11, wherein the pretreatment is performed in the presence of oxygen, nitrogen, argon, hydrogen, chlorine or fluorine or with mixtures of said gases.

13. Use of a modified polymer plastic as set forth in one or several of the previous claims 1 through 3 as a coating of a substrate that consists of transparent glass or transparent plastic.

14. Use of a modified plastic as set forth in claim 13 for the manufacture of laminated glass (VSG).

## Revendications

1. Matière synthétique polymère modifiée contenant une matrice en polymère et des nanotubes de carbone (NTC) est **caractérisée en ce que** le polymère est butyral polyvinylique, qu'une masse des NTC de ≤ 1 pour cent en masse est introduite dans la matrice en polymère et que la matière synthétique comme revêtement ou feuille est formée avec une épaisseur de 1 µm jusqu'à quelques millimètres.

2. Matière synthétique polymère modifiée suivant la revendication 1 est **caractérisée en ce que** plusieures feuilles minces forment un matériau composite.

3. Matière synthétique polymère modifiée suivant la revendication 1 ou 2 est **caractérisée en ce que** le polymère est usinable de façon thermoplastique, qu'il possède une bonne aptitude à la stratification ainsi qu'une haute résistance.

4. Procédé de fabrication de la matière synthétique modifiée suivant une ou plusieures des revendications précédentes contenant les suivantes phases de procédure:
• Extrusion des matières butyral polyvinylique solides sous forme de granulé ou de poudre en ajoutant des NTC dont le pourcentage est moins qu' 1 pour cent en masse et
• Revêtement d'un substrat ou façonnage de la matière synthétique pour former une feuille.

5. Procédé et la fabrication de la matière synthétique modifiée suivant une ou plusieures des revendications précédentes contenant les suivantes phases de procédure:
- Extrusion des matières butyral polyvinylique solides sous forme de granulé ou de poudre avec des composants liquides et/ou des additifs en ajoutant les NTC au moins à un des composants ou additifs utilisés de sorte que le pourcentage des NTC dans le produit final soit moins qu'l pour cent en masse,
- Revêtement d'un substrat ou façonnage de la matière synthétique pour former une feuille.

6. Procédé de fabrication de la matière synthétique modifiée suivant la revendication 5 est **caractérisées en ce qu'**un traitement préalable des NTC est effectué au moyen d'une séparation chimique et/ou physique en phase gazeuse (PVD, CVD), des procédés sol-gel et d'autres procédés de revêtement en phase liquide avant d'ajouter les NTC.

7. Procédé de fabrication de la matière synthétique modifiée suivant la revendication 6 est **caractérisée en ce que** le butyral polyvinylique est mélangé avec un additif auquel on a ajouté des NTC de façon homogène de sorte qu'il en résulte une répartition homogène des NTC dans la concentration finale de 0,1 à 1 pour cent en masse.

8. Procédé de fabrication de la matière synthétique modifiée suivant la revendication 7 est **caractérisée en ce que** le traitement préalable est effectué sous des conditions de pression atmosphérique ou sous des conditions d'un vide.

9. Procédé de fabrication de la matière synthétique modifiée suivant la revendication 7 est **caractérisée en ce que** le traitement préalable est effectué au moyen de la pyrolyse à la flamme (CCVD) ou de la hydrolyse à la flamme (r-CCVD).

10. Procédé de fabrication de la matière synthétique modifiée suivant la revendication 7 est **caractérisée en ce que** le traitement préalable est effectué en présence de silicium, titane, aluminium, étain, tungstène, tantale, cérium, molybdène, zinc, zircon, argent, niobium, indium, arsenic, sélénium, antimoine, fluor et chlore.

11. Procédé de fabrication de la matière synthétique modifiée suivant la revendication 7 est **caractérisée en ce que** le traitement préalable est effectué en présence de cuivre.

12. Procédé de fabrication de la matière synthétique modifiée suivant la revendication 7 ou 11 est **caractérisée en ce que** le traitement préalable est effectué en présence de nitrogène, oxygène, argon, hydrogène, chlore ou fluor ou avec des mélanges de ces gaz.

13. Utilisation de la matière synthétique polymère modifiée suivant une ou plusieures des revendications précédentes 1 à 3 comme revêtement d'un substrat consistant en verre transparent ou d'une matière synthétique transparente.

14. Utilisation de la matière synthétique modifiée suivant la revendication 13 pour la fabrication du verre de sécurité feuilleté.
